# EUROPEAN PATENT SPECIFICATION

(11) **EP 2 085 359 B1**
(45) Date of publication and mention of the grant of the patent: **29.11.2017**
(21) Application number: 07830675.0
(22) Date of filing: 26.10.2007
(51) Int. Cl.: C01B 33/107

(54) **PROCESS FOR PRODUCING TRICHLOROSILANE**
VERFAHREN ZUR HERSTELLUNG VON TRICHLORSILAN
PROCÉDÉ DE FABRICATION DE TRICHLOROSILANE

(30) Priority: 07.11.2006 JP 2006302056; 22.10.2007 JP 2007273545
(43) Date of publication of application: 05.08.2009
(73) Proprietor: Mitsubishi Materials Corporation, Tokyo 100-8117 (JP)
(72) Inventor: MIZUSHIMA, Kazuki, Naka-shi Ibaraki 311-0102 (JP); URUSHIHARA, Makoto, Naka-shi Ibaraki 311-0102 (JP)
(74) Representative: Cabinet Plasseraud
(86) International application number: PCT/JP2007/070941
(87) International publication number: WO 2008/056550

(56) References cited:
- WO-A2-2006/081980
- JP-A- 2 196 014
- JP-A- 57 156 318
- JP-A- 57 156 318
- JP-A- 60 081 010
- JP-A- 60 081 010
- JP-A- 62 021 707
- JP-A- 63 008 207
- JP-A- 63 112 410
- JP-B2- 57 038 524
- US-A- 4 217 334
- US-A- 4 836 997

## Description

### TECHNICAL FILED

The present invention relates to a method for producing trichlorosilane by converting silicon tetrachloride to trichlorosilane.

Priority is claimed on Japanese Patent Application No. 2006-302056 filed on November 7, 2006, and Japanese Patent Application No. 2007-273545 filed on October 22, 2007.

### BACKGROUND ART

Polycrystalline silicon of high purity may be produced, for example, using trichlorosilane (SiHCl₃:TCS in initial name), silicon tetrachloride (SiCl₄: STC in initial name), and hydrogen as raw materials, by hydrogen reduction of trichlorosilane shown by the below-described formula (1) and thermolysis of trichlorosilane shown by the below-described formula (2).

SiHCl₃+H₂→Si+3HCl ..... (1)

4SiHCl₃→Si+3SiCl₄+2H₂ ... (2)

A gas exhausted during the above-described reaction to generate polycrystalline silicon includes by-products as well as unreacted silicon tetrachloride, trichlorosilane, and hydrogen. The by-products include hydrogen chloride, a low boiling point chrolosilane group such as dichlorosilane, and a small amount of a high boiling point chlorosilane group such as tetrachlorodisilane or hexachlorodisilane. These chlorosilane groups are subjected to fractional distillation in accordance with their boiling points and, where necessary, are reused.

For example, silicon tetrachloride recovered by fractional distillation of the exhausted gas of the above-described generation reaction may be used as a raw material for generation of trichlorosilane by hydrogenation conversion shown by the below-described formula (3). The trichlorosilane may be recovered and reused as a raw material for the above-described production of polycrystalline silicon.

SiCl₄+H₂→SiHCl₃+HCl .... (3)

A conversion reaction apparatus (conversion furnace), for example, described in Patent Document 1 is known as an apparatus for producing the trichlorosilane. In this conversion reaction apparatus, a reaction chamber surrounded by a heating element has a dual chamber structure having an outer chamber and an inner chamber constituted of two tubes in a concentric alignment. A heat exchanger is disposed below the reaction chamber. A raw gas supply pipe passage for supplying hydrogen and silicon tetrachloride through the heat exchanger to the reaction chamber and an exhaustion pipe passage for exhausting the reaction product gas from the reaction chamber are connected to the heat exchanger. Thus, the apparatus is constituted such that the supply gas to be supplied to the reaction chamber is preheated in the heat exchanger while cooling the exhausted reaction product gas by heat conduction to the supply gas from the reaction product gas being exhausted from the reaction chamber. Patent Document 1: Japanese Patent No. 3781439. US4217334 discloses a process for the production of hydrogen containing chlorosilanes, especially trichlorosilane, by reaction of silicon tetrachloride with hydrogen.

### DISCLOSURE OF THE INVENTION

In the above-described conventional apparatus for producing trichlorosilane, the reaction product gas is cooled by heat exchange with the supply gas in the heat exchanger disposed below the reaction chamber. On the other hand, a reverse reaction to decompose the trichlorosilane to silicon tetrachloride and hydrogen occurs during the cooling process of the reaction product gas. Therefore, in order to suppress the generation of the reverse reaction to as low as possible, it is devised to increase the cooling rate of the reaction product gas and rapidly cool the reaction product gas within a short time to a temperature at which the reverse reaction does not remarkably occur. However, the above-described cooling device included a disadvantage that it was impossible to avoid the generation of the reverse reaction because of a not so rapid cooling rate, resulting in a low conversion ratio to the trichlorosilane. This disadvantage was prominent when the conversion reaction was exerted at relatively high temperature, especially at a temperature exceeding 1200°C.

Although it is possible to rapidly cool the gas to a temperature at which the reverse reaction does not remarkably occur within an extremely short time within 1 second, this case included a problem that a polymer was by-produced, thereby reducing the conversion ratio. In addition, there was a disadvantage that the polymer as the by-product blocked the piping by adhesion to the pipe wall and the like, and satisfactory performance of the piping and the like could not be maintained. Here, the above-described polymer is of a chlorosilane group of a higher order structure having at least two silicon atoms, for example, Si₂Cl₆, Si₃Cl₈, Si₂H₂Cl₄, and the like.

The present invention solved the above-described problems in the conventional method for producing trichlorosilane. An object of the present invention is to provide a method for producing trichlorosilane which enables the conversion ratio to be enhanced by introducing a cooling gas into a mixed gas generated during a conversion reaction, thereby quenching the mixed product gas while controlling the chemical reaction.

The present invention relates to a method for producing trichlorosilane, in which the above-described problems were solved by the constitutions as disclosed in the claims.

In the method, when a mixed gas is produced in the conversion reaction for producing trichlorosilane by reaction of silicon tetrachloride and hydrogen, a cooling gas containing hydrogen as a main component is introduced to the mixed gas, thereby cooling the mixed gas. As a result, while cooling the mixed gas at a high temperature, the reverse reaction of trichlorosilane is suppressed by the introduced hydrogen. Therefore, it is possible to improve the conversion ratio to trichlorosilane.

Here, the description of the cooling gas of "containing hydrogen as a main component" means that the cooling gas may contain an additional component in a small amount such that the effect of the main component is not largely disturbed by the additional component.

In the introduction of hydrogen, single species may be mixed in the mixed gas. The temperature of the cooling gas mainly composed of hydrogen may be controlled based on a consideration on the cooling rate of the above-described product mixed gas. For example, it is possible to use the cooling gas at -60 to 650°C. It is also possible to preheat the cooling gas before introducing the cooling gas into the mixed gas. The cooling gas of the above-described constitution may be used in combination with another cooling device.

In the method the temperature of the conversion reaction to produce trichlorosilane is not lower than 800°C. In a preferred method the reaction temperature is not lower than 1200°C. Where the temperature of the conversion reaction is lower than 800°C, the production ratio of trichlorosilane (conversion ratio to trichlorosilane) decreases largely. At a reaction temperature of not lower than 1200°C, the conversion reaction is enhanced, and the conversion ratio to trichlorosilane can be improved.

Although the conversion reaction to trichlorosilane is enhanced in accordance with increasing temperature, when the temperature exceeds 1000°C, trichlorosilane in the reaction product gas partially decomposes to hydrogen chloride and SiCl₂ as an intermediate product. The decomposition reaction proceeds with increasing temperature. Especially, at a temperature exceeding 1200°C, SiCl₂ constitutes a main component in the reaction product gas.

In the production method hydrogen in the cooling gas being introduced in the product mixed gas of the conversion reaction reacts with the SiCl₂. Therefore, even when the conversion reaction is progressed at a temperature exceeding 1200°C, a reverse reaction to decompose the trichlorosilane is effectively suppressed, and the conversion ratio to trichlorosilane can be improved.

In the method the cooling gas mainly composed of hydrogen is introduced to cool the above-described produced gas to a temperature of not higher than 650°C. Therefore, the product gas is cooled to a temperature range at which reverse reaction of the conversion reaction does not remarkably occur. Simultaneously, the reverse reaction of the conversion reaction is suppressed by hydrogen.

In a method the cooling gas mainly composed of hydrogen chloride is introduced to quench the mixed gas with a rapid cooling rate to a temperature of not higher than 650°C within 1 second. In this case, although the cooling to a temperature of not higher than 650°C at which reverse reaction of the conversion reaction does not remarkably occurs is performed rapidly within an extremely short time of 1 second or shorter, by-production of polymer is suppressed by hydrogen chloride. As a result, reduction of conversion ratio by the generation of polymer by-product can be effectively suppressed. In the same time, reverse reaction of conversion reaction can be suppressed. Therefore it is possible to further improve the conversion ratio. In addition, by preventing problematic blocking of piping caused by e.g., adhesion of polymer by-product to the wall of the piping, it is possible to maintain the piping and the like at satisfactory conditions. The above-described effects are enlarged when the conversion reaction is performed at relatively high temperature. The effects are especially remarkable, where the conversion reaction temperature exceeds 1200°C.

In the method the mixed gas introduced with the cooling gas is introduced to the condenser to condense and separate hydrogen, and the separated hydrogen-containing gas is reused as the cooling gas. Therefore it is possible to enhance the efficiency of using hydrogen.

As described-above, in accordance with the method for producing trichlosilane according to the present invention, when the product gas is discharged from the reaction vessel, cooling gas mainly composed of hydrogen is introduced to cool the product gas. Therefore, by suppressing a reverse reaction of the conversion reaction and suppressing the by-production of polymer while rapidly cooling the product gas from the high temperature state, it is possible to obtain trichlorosilane with a high conversion ratio.

### BRIEF DESCRIPTION OF DRAWING

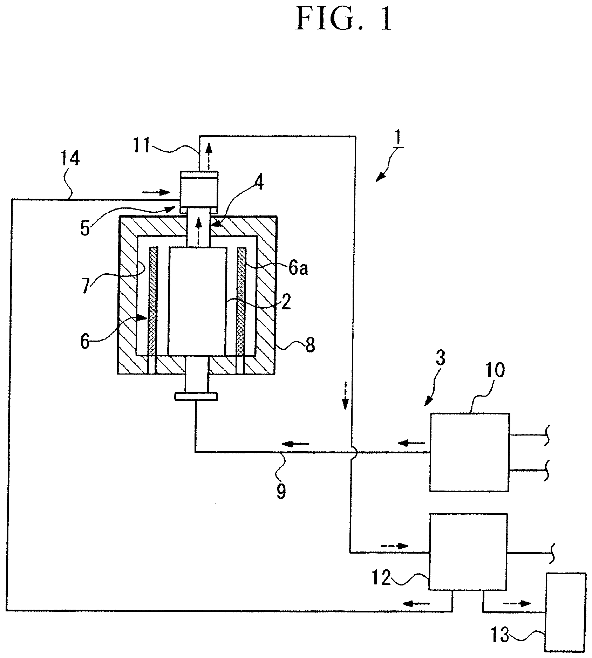

FIG. 1 is a schematic diagram of an embodiment showing the method of producing trichlorosilane and an apparatus for producing trichlorosilane.

### Explanation of symbols

1: Apparatus for producing trichlorosilane.
2: Reaction Chamber
4: Reaction product gas discharging device
5: Cooling gas introducing device
6: Heating device
9: Gas supply pipe
11: Gas exhaustion pipe
14: Cooling gas introducing pipe

### BEST MODE FOR CARRING OUT THE INVENTION

In the following, an embodiment of the method of producing trichlorosilane and an apparatus for producing trichlorosilane is explained with reference to FIG. 1.

An apparatus (conversion furnace) 1 for producing trichlorosilane shown in FIG. 1 comprises: a reaction chamber 2 for producing a mixed gas containing trichlorosilane and hydrogen chloride by subjecting silicon tetrachloride and hydrogen to reaction at a temperature of not lower than 800°C; a gas supply device 3 connected to the reaction chamber 2; a product gas discharging device 4 for discharging the mixed gas to the outside; and a cooling gas introducing device 5 connected to the product gas discharging device 4.

A heating device 6 for heating the reaction chamber 2 is disposed around the reaction chamber 2. A heat insulating member 7 is disposed so as to cover the periphery of the reaction chamber 2 and the heating device 6. The reaction chamber 2, heating device 6, and insulating member 7 are stored in a storage container 8.

The heating device 6 comprises a heater 6a constituted of a heating element which is disposed around the reaction chamber 2 so as to cover the reaction chamber 2. The heater 6a is made of carbon. The heating device 6 performs a heat control such that a temperature in the interior of the reaction chamber 2 is in a range of 800°C to 1900°C. When the temperature in the interior of the reaction chamber 2 is set to be 1200°C or higher, conversion ratio is improved. That is, by the conversion reaction at a temperature exceeding 1200°C, it is possible to recover a relatively large amount of trichlorosilane.

The reaction chamber 2 may be made of carbon, and a surface of the carbon may be coated with silicon carbide. Preferably, the storage container 8 is made of stainless steel.

The gas supply device 3 comprises a gas supply pipe 9 for supplying raw gas to the reaction chamber 2, and a mixing unit 10 connected to the gas supply pipe 9. Hydrogen is introduced to the mixing unit 10, and silicon tetrachloride from an evaporator (not shown) is introduced to the mixing unit 10. Those gasses are mixed in the mixing unit 10 and are introduced to the reaction chamber 2. The silicon tetrachloride to be introduced may include disilane group. Alternatively, disilane group may be removed from the silicon tetrachloride.

The product gas discharging device 4 connected to the reaction chamber 2 comprises a gas exhaustion pipe 11 for discharging the product mixed gas in the reaction chamber 2 to the outside, a cooling separator 12 connected to the gas exhaustion pipe 11, and a distillation device 13 connected to the cooling separator 12. The above-described cooling gas introducing device 5 is connected to the product gas discharging device 4. The cooling gas introducing device 5 comprises a gas introducing pipe 14, and the gas introducing pipe 14 is connected to the inside of a basal end portion of the above-described gas exhaustion pipe 11.

The cooling gas introducing pipe 14 is connected to a supply source (not shown) of the cooling gas, that is, through a supply pipe passage (not shown), connected to a supply source (not shown) of, hydrogen. Through the cooling gas introducing pipe 14, the cooling gas mainly composed of hydrogen is introduced to the product gas.

The apparatus shown in FIG. 1 is constituted such that the cooling gas introducing pipe 14 is connected to the above-described cooling separator 12, and unreacted hydrogen separated in the cooling separator 12 is introduced to the gas exhaustion pipe 11 through the cooling gas introducing pipe 14.

The cooling gas introducing device 5 is constituted such that the amount of the cooling gas to be introduced can be controlled so as to cool the reaction product gas to a temperature of not higher than 650°C. A temperature sensor may be provided inside the basal end portion of the gas exhaustion pipe 11 in order to measure and control the temperature of the reaction product gas being subjected to quenching.

Next, a method for producing trichlorosilane using the above-described apparatus for producing trichlorosilane is explained.

Firstly, a raw gas composed of silicon tetrachloride and hydrogen is introduced from the mixing unit 10 into the reaction chamber 2 through the gas supply pipe 9. The interior of the reaction chamber 2 is heated to the reaction temperature by the heating device 6, and trichlorosilane, hydrogen chloride and the like are produced by a reaction of the raw gas. The reaction product gas is discharged to the outside through the gas exhaustion pipe 11. In that time, by the cooling gas introducing device 5, a cooling gas is introduced to the inside of the basal end portion of the gas exhaustion pipe 11 through the cooling gas introducing pipe 14 and is mixed in the reaction product gas.

By the introduction of the cooling gas, the reaction product gas is rapidly cooled to a temperature of not higher than 650°C. The temperature and an introduced amount of the cooling gas are controlled so as to cool the reaction product gas to 650°C or lower. In that time, the reaction product is cooled to 650°C within 1 second in order to obtain sufficient quenching effect for suppressing the reverse reaction in which decomposition of trichlorosilane occurs. Next, through the gas exhaustion pipe 11, the reaction product gas mixed with the cooling gas is introduced to the cooling separator 12, where the reaction product gas is further cooled. Trichlorosilane separated in the cooling separator 12 is introduced to the distillation device 13 and is condensed and collected.

In the apparatus shown in FIG. 1, unreacted hydrogen gas and the like is separated in the above-described cooling separator 12. The hydrogen gas is introduced to the inside of the basal end portion of the gas exhaustion pipe 11 through the cooling gas introducing pipe 14 and is reused as the cooling gas.

Hydrogen is used as the cooling gas in the present invention, by mixing hydrogen in the reaction product gas to cool the reaction product gas in the time of discharging the reaction product gas from the reaction chamber 2, the reaction product gas at a high temperature state is cooled rapidly, and at the same time, a reverse reaction of conversion is suppressed. Therefore, it is possible to enhance the rate of conversion to trichlorosilane.

The above-described effect is increased when the conversion reaction is performed at a relatively high temperature. The effect is especially remarkable, when the reaction temperature exceeds 1200°C. Especially, where the reaction product gas is cooled to 650°C or lower by being mixed with hydrogen, the reaction product gas is rapidly cooled to a temperature range at which the reverse reaction of the conversion reaction can be suppressed sufficiently. Therefore, it is possible to enhance the rate of conversion to trichlorosilane.

If silicon tetrachloride would be used as the cooling gas as an alternative to hydrogen or being mixed with hydrogen, it would be possible to obtain a similar effect as in the case of using hydrogen as the cooling gas. In this case, a partial amount of silicon tetrachloride separated in the distillation device 13 may be introduced to the gas exhaustion pipe 11 through the cooling gas introducing pipe 14.

If hydrogen chloride would be used as the cooling gas, the hydrogen chloride is introduced into the gas exhaustion pipe 11 through the cooling gas introducing pipe 14. By mixing the hydrogen chloride, it would be possible to cool the reaction product gas to a temperature of not higher than 650°C with a cooling rate to perform the cooling within 1 second while suppressing the by-production of polymer, thereby enhancing the conversion ratio to trichlorisilane.

In general, when the reaction product gas is cooled rapidly within an extremely short time of 1 second or shorter to a temperature at which the reverse reaction causing decomposition of trichlorosilane, polymer is easily generated as by-product in the cooling process. For example, SiCl₂ is generated by decomposition of trichlorosilane as shown in the below-described formula (4), and the SiCl₂ is reacted with SiCl₄ to generate the polymer as shown in the below-described formula (5). The SiCl₂ is generated in larger amount at a high temperature. Therefore, the by-production of polymer increases where the conversion reaction is caused to occur at relatively high temperature, and is especially remarkable at a temperature exceeding 1200°C.

SiHCl₃→SiCl₂+HCl ..... (4)

SiCl₂+ SiCl₄→Si₂Cl₆ ..... (5)

On the other hand, hydrogen chloride has an effect of suppressing the by-production of polymer in accordance with the reaction formula of the above-described (4), since the hydrogen chloride enhances a reaction to produce trichlorosilane by reacting with SiCl₂ as shown in the below-described formula (6). In addition, as shown in the below-described reaction formulae (7), (8), and (9), the hydrogen chloride has an effect of decomposing once by-produced polymer.

SiCl₂+HCl→SiHCl₃ ..... (6)

Si₂Cl₆+HCl→SiHCl₃+SiCl₄ ..... (7)

Si₃Cl₈+2HCl→2SiHCl₃+SiCl₄ ..... (8)

Si₂H₂Cl₄+2HCl→2SiHCl₃ ..... (9)

Therefore, where the reaction product gas is rapidly cooled to a temperature of not higher than 650°C within 1 second using hydrogen chloride as the cooling gas, it is possible to quench the reaction product gas to a temperature of not higher than 650°C by the introduction of hydrogen chloride while suppressing by-production of polymer, thereby improving the conversion ratio to triclorosilane. In addition, problems such as blocking of piping by adhesion of polymer by-product to the wall of the piping are prevented and the piping is maintained at satisfactory conditions. The above-described effect is enlarged when the conversion reaction is performed at a relatively high temperature. The effect is especially remarkable, when the reaction temperature exceeds 1200°C.

### Examples

In the following, Examples according to the present invention are shown.

### Example 1 (according to the invention and reference)

In each case, using the production apparatus shown in FIG. 1, a mixed gas of hydrogen and silicon tetrachloride (H₂/STC molar ratio: 2) was supplied in the reaction chamber and was subjected to reaction at a reaction temperature listed in Table 1, and trichlorosilane was produced. When the product mixed gas was discharged outside the chamber through the exhaustion pipe 11, a cooling gas shown in Table 1 was introduced to the above-described product mixed gas through the cooling gas introducing device 14, thereby cooling the product mixed gas to the temperature listed in Table 1. The results are shown in Table 1.

As shown in the results of Table 1, by introducing H₂ or STC as the cooling gas to the product mixed gas, the product mixed gas could be quenched to 650°C or lower within 1 second or shorter, thereby enhancing the production rate of trichlorosilane (TCS).

**Table 1**

| Reaction temperature | Cooling gas | | | Cooling time (second) | Post-cooling temperature of product gas | Production Ratio of TCS |
|---|---|---|---|---|---|---|
| | Species | Amount of introduction | Temperature | | | |
| 1200°C | Not added | | - | - | 598°C | 34.5 |
| | H₂ | 3.2 mol | Room temperature | 0.06 | 596°C | 39 |
| | H₂ | 6.8 mol | Room temperature | 0.06 | 596°C | 41 |
| | STC | 0.9 mol | Room temperature | 0.06 | 599°C | 39 |
| | STC | 1.9 mol | Room temperature | 0.06 | 601°C | 40 |

### [Remarks]

The amount of introduction of the cooling gas denotes an amount relative to 1 mol of Si contained in STC of raw material.

The production ratio of TCS denotes a ratio (by mol %) of the amount of production of TCS to the STC in the raw material.

### Example 2 (reference)

In each case, HCl was used as the cooling gas. Under conditions shown in Table 2, HCl was introduced to the product mixed gas, thereby cooling the product mixed gas to the temperature shown in Table 2. The results are shown in Table 2. As shown in the results of Table 2, by introducing HCl as the cooling gas to the product mixed gas, polymer was not generated even under rapid cooling.

**Table 2**

| Reaction temperature | Cooling gas | | | Cooling time (second) | Post-cooling temperature of product gas | Polymer |
|---|---|---|---|---|---|---|
| | Species | Amount of introduction | Temperature | | | |
| 1200°C | Not added | | - | - | 598°C | Present |
| | HCl | 3.7 mol | Room temperature | 0.06 | 602°C | Absent |
| | HCl | 6.7 mol | Room temperature | 0.06 | 603°C | Absent |

[Remark] The amount of introduction of the cooling gas denotes an amount relative to 1 mol of Si contained in STC of raw material.

### INDUSTRIAL APPLICABILITY

As described-above, in the method for producing trichlorosilane according to the present invention, when a product gas is discharged from the reaction chamber, the product gas is cooled by being introduced with a cooling gas mainly composed of hydrogen. As a result, the product gas at a high temperature state is quenched, and at the same time, a reverse reaction of the conversion reaction is suppressed, and by-production of polymer is suppressed. Therefore, it is possible to obtain trichlorosilane at a high conversion ratio. Therefore, the present invention is highly useful in industrial applications.

## Claims

1. A method for producing trichlorosilane, comprising:
performing production of a mixed gas containing trichlorosilane and hydrogen chloride by introducing silicon tetrachloride and hydrogen into a reaction chamber and subjecting them to reaction at a temperature of not lower than 800°C;
cooling the mixed gas to temperature of not higher than 650°C by introducing a cooling gas to the mixed gas while discharging the mixed gas from the reaction chamber, the cooling gas containing hydrogen as a main component;
introducing the mixed gas mixed with the cooling gas into a cooling separator;
further cooling the mixed gas mixed with the cooling gas in the cooling separator;
introducing trichlorosilane separated in the cooling separator to a distillation device; and
condensing and collecting the trichlorosilane,
wherein the mixed gas is cooled to a temperature of 650°C within 1 second when the reaction product gas is cooled to a temperature of not higher than 650°C by introducing the cooling gas.

2. The method for producing trichlorosilane according to claim 1, wherein a temperature of the cooling gas introduced to the mixed gas is -60 to 650°C.

3. The method for producing trichlorosilane according to claim 1, wherein a reaction temperature during the production of the mixed gas is not lower than 1200°C.

4. The method for producing trichlorosilane according to claim 1, further comprising: separating unreacted hydrogen in the cooling separator, and reusing the separated gas as the cooling gas.

## Patentansprüche

1. Verfahren zur Herstellung von Trichlorsilan, umfassend:
Durchführen der Erzeugung eines Trichlorsilan und Chlorwasserstoff enthaltenden Mischgases durch Einleiten von Siliciumtetrachlorid und Wasserstoff in eine Reaktionskammer und Unterziehen dieser einer Reaktion bei einer Temperatur von nicht niedriger als 800 °C;
Abkühlen des Mischgases auf eine Temperatur von nicht höher als 650 °C durch Zuführen eines Kühlgases zu dem Mischgas während des Ableitens des Mischgases aus der Reaktionskammer, wobei das Kühlgas Wasserstoff als Hauptkomponente enthält;
Einleiten des mit dem Kühlgas gemischten Mischgases in einen Kühlseparator;
weiteres Abkühlen des mit dem Kühlgas gemischten Mischgases in dem Kühlseparator;
Zuführen von in dem Kühlseparator abgetrenntem Trichlorsilan zu einer Destillationsvorrichtung; und
Kondensieren und Sammeln des Trichlorsilans,
wobei das Mischgas innerhalb von 1 Sekunde auf eine Temperatur von 650 °C abgekühlt wird, wenn das Reaktionsproduktgas durch Zuführen des Kühlgases auf eine Temperatur von nicht höher als 650 °C abgekühlt wird.

2. Verfahren zur Herstellung von Trichlorsilan nach Anspruch 1, wobei eine Temperatur des zu dem Mischgas zugeführten Kühlgases -60 bis 650 °C beträgt.

3. Verfahren zur Herstellung von Trichlorsilan nach Anspruch 1, wobei eine Reaktionstemperatur während der Erzeugung des Mischgases nicht niedriger als 1200 °C ist.

4. Verfahren zur Herstellung von Trichlorsilan nach Anspruch 1, weiterhin umfassend:
Abtrennen von nicht umgesetztem Wasserstoff in dem Kühlseparator und Wiederverwenden des abgetrennten Gases als Kühlgas.

## Revendications

1. Procédé de production de trichlorosilane, comprenant :
effectuer la production d'un gaz mixte contenant du trichlorosilane et du chlorure d'hydrogène par introduction de tétrachlorure de silicium et d'hydrogène dans une chambre réactionnelle et leur soumission à une réaction à une température qui n'est pas inférieure à 800 °C ;
refroidir le gaz mixte jusqu'à une température qui n'est pas supérieure à 650 °C par introduction d'un gaz de refroidissement dans le gaz mixte tout en évacuant le gaz mixte de la chambre réactionnelle, le gaz de refroidissement contenant de l'hydrogène en tant que composant principal ;
introduire le gaz mixte mélangé avec le gaz de refroidissement dans un séparateur à refroidissement ;
refroidir encore le gaz mixte mélangé avec le gaz de refroidissement dans le séparateur à refroidissement ;
introduire du trichlorosilane séparé dans le séparateur à refroidissement dans un dispositif de distillation ; et
faire condenser et recueillir le trichlorosilane,
dans lequel le gaz mixte est refroidi jusqu'à une température de 650 °C sous 1 seconde quand le produit réactionnel gazeux est refroidi jusqu'à une température qui n'est pas supérieure à 650 °C par introduction du gaz de refroidissement.

2. Procédé de production de trichlorosilane selon la revendication 1, dans lequel une température du gaz de refroidissement introduit dans le gaz mixte est de -60 à 650 °C.

3. Procédé de production de trichlorosilane selon la revendication 1, dans lequel une température réactionnelle pendant la production du gaz mixte n'est pas inférieure à 1200 °C.

4. Procédé de production de trichlorosilane selon la revendication 1, comprenant en outre : séparer de l'hydrogène n'ayant pas réagi dans le séparateur à refroidissement, et réutiliser le gaz séparé comme gaz de refroidissement.
